# EUROPÄISCHE PATENTSCHRIFT

(11) **EP 3 838 636 B1**
(45) Veröffentlichungstag und Bekanntmachung des Hinweises auf die Patenterteilung: **02.11.2022**
(21) Anmeldenummer: 20213102.5
(22) Anmeldetag: 10.12.2020
(51) Int. Cl.: B60H 1/00

(54) **LUFTFÜHRUNGSANORDNUNG**
AIR GUIDE ASSEMBLY
AGENCEMENT DE GUIDAGE D'AIR

(30) Priorität: 18.12.2019 DE 202019107074 U
(43) Veröffentlichungstag der Anmeldung: 23.06.2021
(73) Patentinhaber: REHAU Automotive SE & Co. KG, 95111 Rehau (DE)
(72) Erfinder: Ahnert, Henry, 95126 Schwarzenbach/Saale (DE); Höllering, Jürgen, 95152 Selbitz (DE); Winterling, Stefan, 95182 Tauperlitz (DE)

(56) Entgegenhaltungen:
- DE-A1-102007 037 734
- DE-U1-202013 105 720
- DE-U1-202015 106 952
- JP-A- 2006 248 351

## Beschreibung

Die vorliegende Erfindung betrifft eine Luftführungsanordnung für ein Kraftfahrzeug, mit einem Luftführungskanal, wobei der Luftführungskanal eine Kanalwandung aufweist, die einen Hohlraum zur Leitung der Luft begrenzt, der zwischen wenigstens einer ersten Durchtrittsöffnung zum Eintritt von Luft und wenigstens einer zweiten Durchtrittsöffnung zum Austritt von Luft liegt, und wobei die Kanalwandung eine Außenseite und eine Innenseite aufweist, wobei der Luftführungskanal einstückig in einem Blasformverfahren oder in einem Thermoformverfahren hergestellt ist und, wobei der Luftführungskanal im Bereich wenigstens einer seiner Durchtrittsöffnungen einen einstückig mit dem Luftführungskanal ausgebildeten Verbindungsabschnitt zum luftleitenden Verbinden des Luftführungskanals mit einem weiteren Luftführungskanal oder zum luftleitenden Verbinden des Luftführungskanals mit einem Luftverteilungselement aufweist.

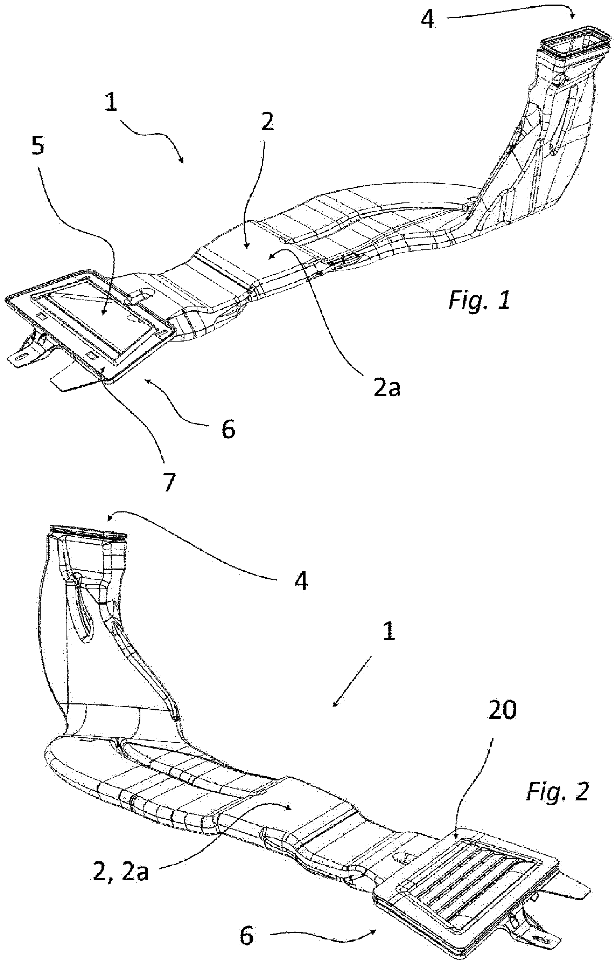

Aus dem Dokument DE 699 20 556 T2 ist eine Luftführungsanordnung bekannt. Der Verbindungsabschnitt ist hierbei durch einen vollflächig abgequetschten Bereich des Luftführungskanals gebildet, der neben einer Durchtrittsöffnung (siehe Bezugszeichen 17 in Fig. 2) angeordnet ist. Dieser fahnenartige Bereich ist sehr biegeweich, nicht maßhaltig und somit unsicher zur luftleitenden Verbindung des Luftführungskanals mit einem weiteren Luftführungskanal oder mit einem Luftverteilungselement. Undichtigkeit und sogar ein Lösen der Verbindung tritt daher bei derartigen Luftführungsanordnungen relativ häufig auf.

Weitere Luftführungsanordnungen des Standes der Technik können den Dokumenten DE 10 2007 037 734 A1, JP 2006 248351 A, DE 20 2015 106 952 U1 und DE 20 2013 105 720 U1 entnommen werden.

Die vorliegende Erfindung stellt sich daher die Aufgabe, eine Luftführungsanordnung für ein Kraftfahrzeug so auszugestalten, dass diese eine zuverlässige Verbindung mit einem weiteren Luftführungskanal oder mit einem Luftverteilungselement ermöglicht.

Diese Aufgabe wird vorliegend erfindungsgemäß gelöst durch eine Luftführungsanordnung für ein Kraftfahrzeug, mit:
- einem Luftführungskanal, wobei der Luftführungskanal eine Kanalwandung aufweist, die einen Hohlraum zur Leitung der Luft begrenzt, der zwischen wenigstens einer ersten Durchtrittsöffnung zum Eintritt von Luft und wenigstens einer zweiten Durchtrittsöffnung zum Austritt von Luft liegt, und wobei die Kanalwandung eine Außenseite und eine Innenseite aufweist,

wobei der Luftführungskanal einstückig in einem Blasformverfahren oder in einem Thermoformverfahren hergestellt ist und, wobei der Luftführungskanal im Bereich wenigstens einer seiner Durchtrittsöffnungen einen einstückig mit dem Luftführungskanal ausgebildeten Verbindungsabschnitt zum luftleitenden Verbinden des Luftführungskanals mit einem weiteren Luftführungskanal oder zum luftleitenden Verbinden des Luftführungskanals mit einem Luftverteilungselement aufweist,
wobei der Verbindungsabschnitt ein die Durchtrittsöffnung abschnittsweise oder vollständig umgebender Flansch ist, wobei der Flansch zumindest bereichsweise doppelwandig ausgebildet ist und der Flansch in den doppelwandigen Bereichen zwischen den sich gegenüberliegenden Flanschseiten einen Hohlraum einschließt.

Die Ausbildung von doppelwandigen Bereichen in einem die Durchtrittsöffnung abschnittsweise oder vollständig umgebenden Flansch während der Herstellung des Luftführungskanals in einem Blasformverfahren oder in einem Thermoformverfahren bewirkt, dass der Verbindungsbereich eine verbesserte Maßhaltigkeit und einen geringeren Bauteilverzug aufweist. Dies gewährleistet eine sichere und zuverlässige Verbindung mit einem weiteren Luftführungskanal oder mit einem Luftverteilungselement.

Der Flansch steht bevorzugt in einem rechten Winkel oder in einem stumpfen Winkel von der Außenseite des Luftführungskanals ab.

Innerhalb des Flansches ist mindestens eine Rastelementaufnahme zur Verbindung mit einem Rastelement des weiteren Luftführungskanals oder zur Verbindung mit einem Rastelement des Luftverteilungselements ausgebildet. Die Rastelementaufnahme ist ein den Flansch durchsetzender Durchgang. Der Durchgang ist gegenüber dem Hohlraum des Flansches dicht. Das Rastelement ist bevorzugt als Rasthaken oder als Rastnase ausgebildet.

Auf dem Verbindungsabschnitt kann ein Dichtungselement vorgesehen sein, zur Abdichtung gegenüber dem weiteren Luftführungskanal oder dem Luftverteilungselement. Durch das Dichtungselement wird zusätzlich unterstützt, dass im verbundenen Zustand von Luftführungskanal und Luftverteilungselement oder weiterem Luftführungskanal ungewollt Luft aus der Durchtrittsöffnung austreten kann. Das Dichtelement kann insbesondere einen Schaumstoff umfassen. Das Dichtelement kann durch einen Teilabschnitt einer Fussmatte oder eines Teilabschnitts eines Teppichs des Kraftfahrzeugs gebildet sein.

Der Luftführungskanal besteht bevorzugt aus einem thermoplastischen Material. Das thermoplastische Material kann insbesondere ein Polyamid oder ein Polyolefin, insbesondere ein Polyethylen hoher Dichte (PE-HD) umfassen.

Die Luftführungsanordnung ist bevorzugt Teil einer Klimaanlage eines Kraftfahrzeuges.

Die Luftführungsanordnung ist bevorzugt zur Fußraumbelüftung eines Kraftfahrzeuges vorgesehen.

Teil der Erfindung ist ferner eine Luftführungsbaugruppe mit einer Luftführungsanordnung wie vorstehend beschrieben und einem mit der Luftführungsanordnung verbundenen weiteren Luftführungskanal oder einem mit der Luftführungsanordnung verbundenen Luftverteilungselement. Das Luftverteilungselement kann insbesondere ein mit einem Gitter oder mit Lamellen versehender Luftausströmer sein.

Im Folgenden wird die Erfindung anhand lediglich Ausführungsbeispiele darstellender Figuren näher erläutert. Gleiche oder funktionsgleiche Elemente sind mit den gleichen Bezugszeichen versehen.

Es zeigen:
- Fig. 1 und 2:: dreidimensionale Ansichten einer ersten Luftführungsanordnung für ein Kraftfahrzeug;
- Fig. 3:: eine dreidimensionale Ansicht der Unterseite der ersten Luftführungsanordnung aus Fig. 2;
- Fig. 4 und 5:: Querschnittsdarstellung der Luftführungsanordnungen aus Fig. 1 und Fig. 2;
- Fig. 6 und 7:: dreidimensionale Ansichten einer zweiten Luftführungsanordnung für ein Kraftfahrzeug;
- Fig. 8:: eine dreidimensionale Ansicht der Oberseite der zweiten Luftführungsanordnung aus Fig. 6;
- Fig. 9 und 10:: Querschnittsdarstellung der Luftführungsanordnungen aus Fig. 6 und Fig. 7.

Die Fig. 1 und Fig. 2, sowie die Fig. 6 und Fig. 7 zeigen in einer dreidimensionalen Draufsichtsdarstellung eine Luftführungsanordnung für ein Kraftfahrzeug, mit
- einem Luftführungskanal 1, wobei der Luftführungskanal 1 eine Kanalwandung 2 aufweist, die einen Hohlraum 3 zur Leitung der Luft begrenzt, der zwischen wenigstens einer ersten Durchtrittsöffnung 4 zum Eintritt von Luft und wenigstens einer zweiten Durchtrittsöffnung 5 zum Austritt von Luft liegt, und wobei die Kanalwandung 2 eine Außenseite 2a und eine Innenseite 2b aufweist.

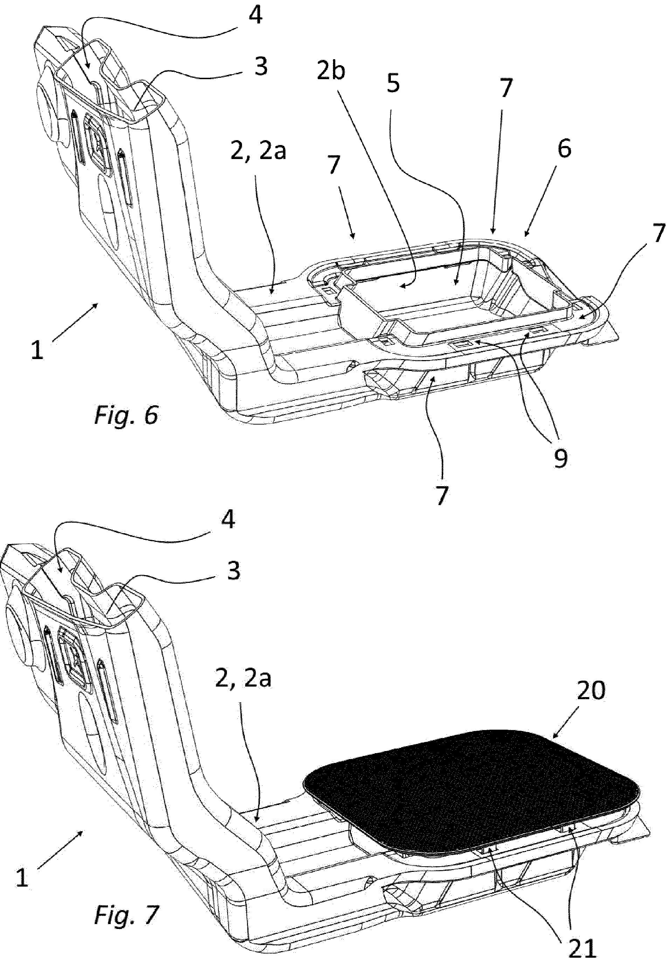

Der Luftführungskanal 1 ist einstückig in einem Blasformverfahren oder in einem Thermoformverfahren hergestellt. Der Luftführungskanal 1 weist im Bereich wenigstens einer seiner Durchtrittsöffnungen 4, 5 einen einstückig mit dem Luftführungskanal 1 ausgebildeten Verbindungsabschnitt 6 zum luftleitenden Verbinden des Luftführungskanals 1 mit einem weiteren Luftführungskanal oder zum luftleitenden Verbinden des Luftführungskanals 1 mit einem Luftverteilungselement 20 (vgl. Fig. 2 oder Fig. 7) auf.

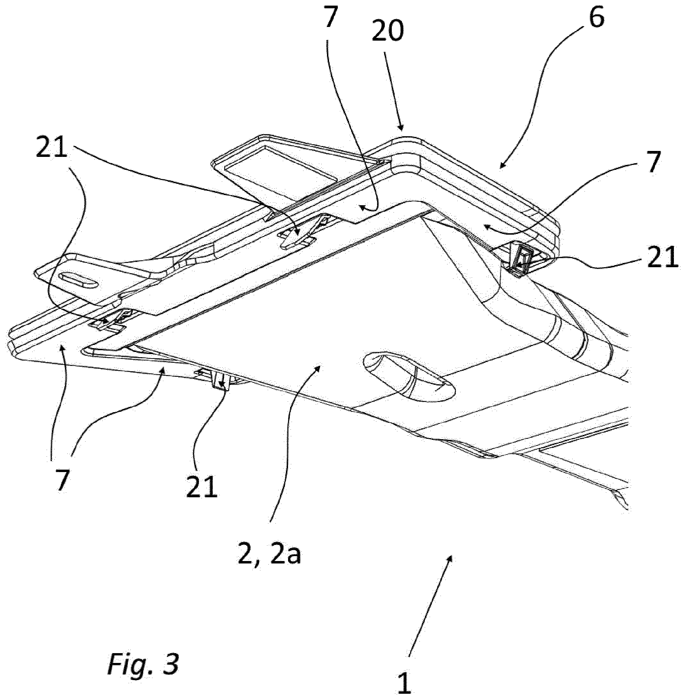

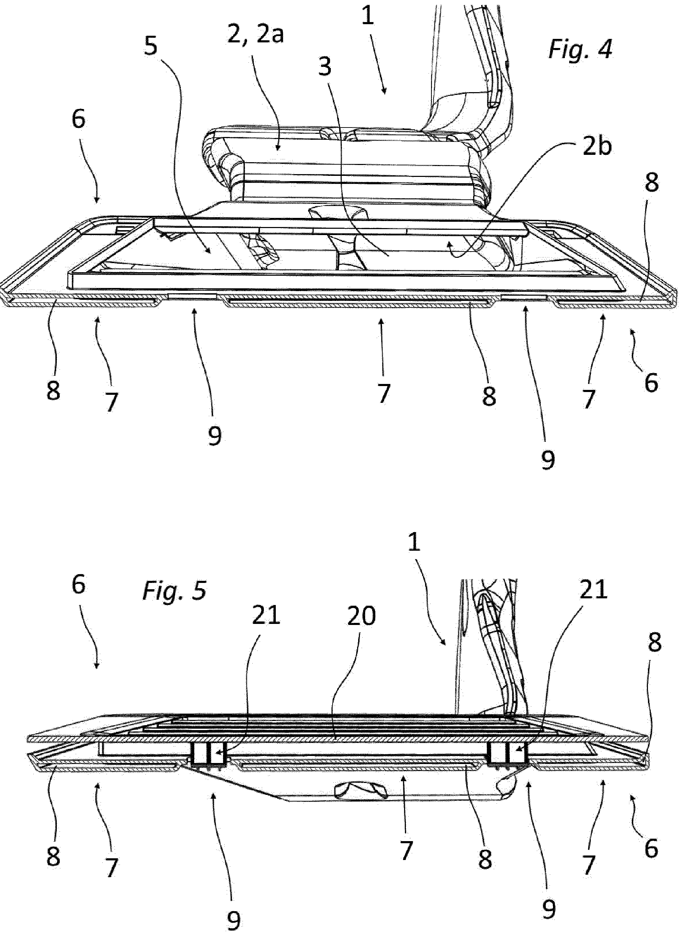

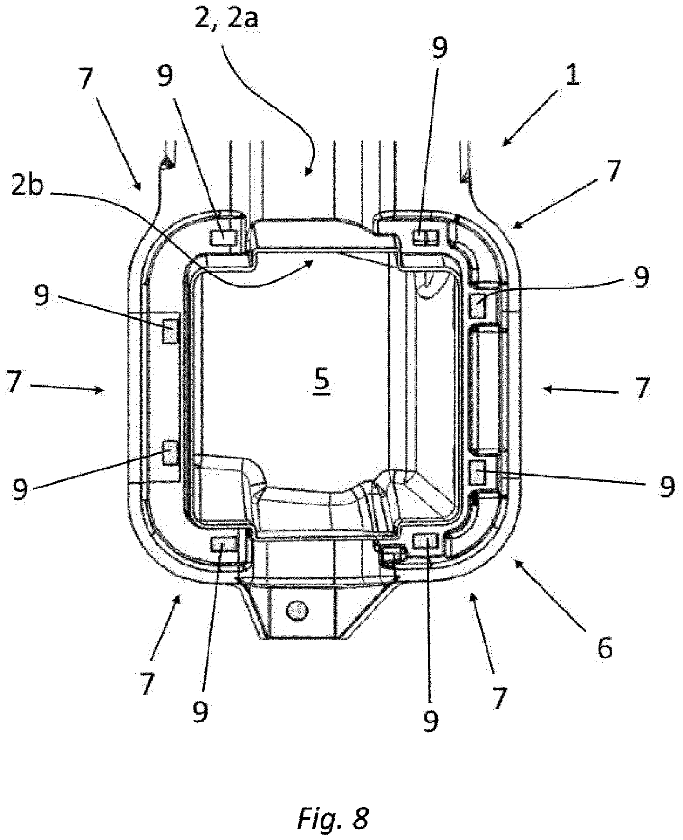

Der Verbindungsabschnitt 6 ist ein die Durchtrittsöffnung 5 abschnittsweise oder vollständig umgebender Flansch 6 (vgl. auch Fig. 3 und Fig. 8). Der Flansch 6 ist zumindest bereichsweise doppelwandig ausgebildet und der Flansch 6 schließt in den doppelwandigen Bereichen 7 zwischen den sich gegenüberliegenden Flanschseiten einen Hohlraum 8 ein (vgl. Schnittdarstellungen in Fig. 4 und Fig. 5, sowie Fig. 9 und Fig. 10).

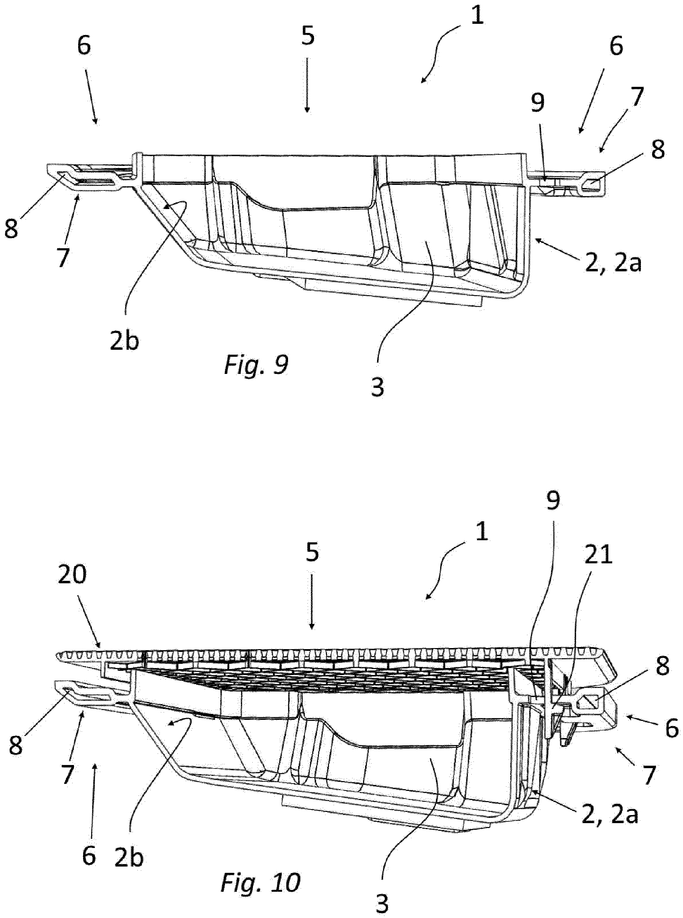

Der Flansch 6 steht in dem zweiten Beispiel einer Luftführungsanordnung in einem rechten Winkel (vgl. insbesondere Fig. 9 oder Fig. 10) oder-wie bei dem ersten Beispiel einer Luftführungsanordnung - in einem stumpfen Winkel (vgl. insbesondere Fig. 3 oder Fig. 5) von der Außenseite (2a) des Luftführungskanals ab.

Innerhalb des Flansches 6 ist bei beiden Ausführungsbeispielen mindestens eine Rastelementaufnahme 9 zur Verbindung mit einem Rastelement des weiteren Luftführungskanals oder zur Verbindung mit einem Rastelement 21 des Luftverteilungselements 20 ausgebildet. Die Rastelementaufnahme 9 ist hierbei jeweils ein den Flansch 6 durchsetzender Durchgang, wobei der Durchgang gegenüber dem Hohlraum 8 des Flansches 6 dicht ist. Das Rastelement 21 ist als Rastnase ausgebildet.

Nicht näher dargestellt ist, dass auf dem Verbindungsabschnitt 6 ein Dichtungselement vorgesehen sein kann, zur Abdichtung gegenüber dem weiteren Luftführungskanal oder dem Luftverteilungselement 20.

Der Luftführungskanal 1 beider Ausführungsbeispiele besteht aus einem thermoplastischen Material, wobei das thermoplastische Material ein Polyamid oder ein Polyolefin, insbesondere PE-HD umfassen kann.

Die gezeigten Luftführungsanordnungen sind zur Fußraumbelüftung eines Kraftfahrzeuges vorgesehen.

Die Fig. 2, Fig. 3, Fig. 5, Fig. 7 und die Fig. 10 zeigen jeweils eine Luftführungsbaugruppe mit einer der beiden vorstehend beschriebenen Luftführungsanordnung und einem mit der Luftführungsanordnung verbundenen Luftverteilungselement 20. Das Luftverteilungselement 20 des ersten Ausführungsbeispiels (Fig. 2, Fig. 3, Fig. 5) ist ein mit Lamellen versehener Luftausströmer. Das Luftverteilungselement 20 des zweiten Ausführungsbeispiels (Fig. 7 und Fig. 10) ist ein mit einem Gitter versehender Luftausströmer.

## Patentansprüche

1. Luftführungsanordnung für ein Kraftfahrzeug, mit
- einem Luftführungskanal (1), wobei der Luftführungskanal (1) eine Kanalwandung (2) aufweist, die einen Hohlraum (3) zur Leitung der Luft begrenzt, der zwischen wenigstens einer ersten Durchtrittsöffnung (4) zum Eintritt von Luft und wenigstens einer zweiten Durchtrittsöffnung (5) zum Austritt von Luft liegt, und wobei die Kanalwandung (2) eine Außenseite (2a) und eine Innenseite (2b) aufweist,
wobei der Luftführungskanal (1) einstückig in einem Blasformverfahren oder in einem Thermoformverfahren hergestellt ist,
wobei der Luftführungskanal (1) im Bereich wenigstens einer seiner Durchtrittsöffnungen (4, 5) einen einstückig mit dem Luftführungskanal (1) ausgebildeten Verbindungsabschnitt (6) zum luftleitenden Verbinden des Luftführungskanals (1) mit einem weiteren Luftführungskanal oder zum luftleitenden Verbinden des Luftführungskanals (1) mit einem Luftverteilungselement (20) aufweist,
wobei
der Verbindungsabschnitt (6) ein die Durchtrittsöffnung (5) abschnittsweise oder vollständig umgebender Flansch (6) ist, wobei der Flansch (6) zumindest bereichsweise doppelwandig ausgebildet ist und der Flansch (6) in den doppelwandigen Bereichen (7) zwischen den sich gegenüberliegenden Flanschseiten einen Hohlraum (8) einschließt,
und wobei innerhalb des Flansches (6) mindestens eine Rastelementaufnahme (9) zur Verbindung mit einem Rastelement des weiteren Luftführungskanals oder zur Verbindung mit einem Rastelement (21) des Luftverteilungselements (20) ausgebildet ist, **dadurch gekennzeichnet, dass** die Rastelementaufnahme (9) ein den Flansch (6) durchsetzender Durchgang (9) ist und der Durchgang gegenüber dem Hohlraum (8) des Flansches (6) dicht ist.

2. Luftführungsanordnung nach Anspruch 1, **dadurch gekennzeichnet, dass** der Flansch (6) in einem rechten Winkel oder in einem stumpfen Winkel von der Außenseite (2a) des Luftführungskanals (1) absteht.

3. Luftführungsanordnung nach einem der vorstehenden Ansprüche, **dadurch gekennzeichnet, dass** auf dem Verbindungsabschnitt (6) ein Dichtungselement vorgesehen ist, zur Abdichtung gegenüber dem weiteren Luftführungskanal oder dem Luftverteilungselement (20).

4. Luftführungsanordnung nach einem der vorstehenden Ansprüche, **dadurch gekennzeichnet, dass** der Luftführungskanal (1) aus einem thermoplastischen Material besteht.

5. Luftführungsanordnung nach Anspruch 4, **dadurch gekennzeichnet, dass** das thermoplastische Material ein Polyamid oder ein Polyolefin, insbesondere PE-HD umfasst.

6. Luftführungsanordnung nach einem der vorstehenden Ansprüche, **dadurch gekennzeichnet, dass** die Luftführungsanordnung zur Fußraumbelüftung eines Kraftfahrzeuges vorgesehen ist.

7. Luftführungsbaugruppe mit einer Luftführungsanordnung nach einem der vorstehenden Ansprüche und einem mit der Luftführungsanordnung verbundenen weiteren Luftführungskanal oder einem mit der Luftführungsanordnung verbundenen Luftverteilungselement (20).

8. Luftführungsbaugruppe nach Anspruch 7, **dadurch gekennzeichnet, dass** das Luftverteilungselement (20) ein mit einem Gitter oder mit Lamellen versehender Luftausströmer ist.

## Claims

1. An air guidance arrangement for a motor vehicle, having
- an air guidance channel (1), wherein the air guidance channel (1) has a channel wall (2) which delimits a cavity (3) for conducting the air, said cavity lying between at least one first through opening (4) for the inlet of air and at least one second through opening (5) for the outlet of air, and wherein the channel wall (2) has an outer side (2a) and an inner side (2b),
wherein the air guidance channel (1) is produced in a single piece in a blow-molding method or in a thermoforming method,
wherein the air guidance channel (1) has, in the region of at least one of its through openings (4, 5), a connection section (6) formed in a single piece with the air guidance channel (1) for connecting, in an air-conducting manner, the air guidance channel (1) to a further air guidance channel or for connecting, in an air-conducting manner, the air guidance channel (1) to an air distribution element (20),
wherein
the connection section (6) is a flange (6) which partially or completely surrounds the through opening (5), wherein the flange (6) has a double-wall design at least in some regions and the flange encloses a cavity (8) in the double-wall regions (7) between the opposite flange sides,
and wherein
within the flange (6), at least one latching element receiver (9) for connection to a latching element of the further air guidance channel or for connection to a latching element (21) of the air distribution element (20) is formed, **characterized in that**
the latching element receiver (9) is a passage (9) that penetrates the flange (6) and the passage is sealed with respect to the cavity (8) of the flange (6).

2. The air guidance arrangement according to claim 1, **characterized in that** the flange (6) projects at a right angle or an obtuse angle from the outer side (2a) of the air guidance channel (1).

3. The air guidance arrangement according to any one of the preceding claims, **characterized in that** on the connection section (6), a sealing element is provided for sealing with respect to the further air guidance channel or the air distribution element (20).

4. The air guidance arrangement according to any one of the preceding claims, **characterized in that** the air guidance channel (1) consists of a thermoplastic material.

5. The air guidance arrangement according to claim 4, **characterized in that** the thermoplastic material comprises a polyamide or a polyolefin, more particularly PE-HD.

6. The air guidance arrangement according to any one of the preceding claims, **characterized in that** the air guidance arrangement is provided for ventilating the footwell of a motor vehicle.

7. An air guidance assembly having an air guidance arrangement according to any one of the preceding claims and having a further air guidance channel connected to the air guidance arrangement or having an air distribution element (20) connected to the air guidance arrangement.

8. The air guidance assembly according to claim 7, **characterized in that** the air distribution element (20) is an air vent provided with a grille or with slats.

## Revendications

1. Ensemble de guidage d'air pour un véhicule à moteur, avec
- un conduit de guidage d'air (1), dans lequel le conduit de guidage d'air (1) présente une paroi de conduit (2), qui délimite une cavité (3) pour acheminer l'air, qui se trouve entre au moins une première ouverture de passage (4) pour faire entrer de l'air et au moins une deuxième ouverture de passage (5) pour faire sortir de l'air, et dans lequel la paroi de conduit (2) présente un côté extérieur (2a) et un côté intérieur (2b),
dans lequel le conduit de guidage d'air (1) est fabriqué d'un seul tenant dans un procédé de moulage par soufflage ou dans un procédé de thermoformage,
dans lequel le conduit de guidage d'air (1) présente, dans la zone d'au moins une de ses ouvertures de passage (4, 5), une section de liaison (6), réalisée d'un seul tenant avec le conduit de guidage d'air (1), pour relier en acheminant de l'air le conduit de guidage d'air (1) à un autre conduit de guidage d'air ou pour relier en acheminant de l'air le conduit de guidage d'air (1) à un élément de répartition d'air (20),
dans lequel
la section de liaison (6) est une bride entourant par sections ou totalement l'ouverture de passage (5), dans lequel la bride (6) est réalisée au moins par endroits avec deux parois et la bride (6) forme une cavité (8) dans les zones à double paroi (7) entre les côtés de bride se faisant face,
et dans lequel
au moins un logement d'élément d'enclenchement (9) destiné à être relié à un élément d'enclenchement de l'autre conduit de guidage d'air ou destiné à être relié à un élément d'enclenchement (21) de l'élément de répartition d'air (20) est réalisé à l'intérieur de la bride (6), **caractérisé en ce que**
le logement d'élément d'enclenchement (9) est un passage (9) traversant la bride (6) et le passage est étanche par rapport à la cavité (8) de la bride (6).

2. Ensemble de guidage d'air selon la revendication 1, **caractérisé en ce que** la bride (6) fait saillie, selon un angle droit ou selon un angle obtus, du côté extérieur (2a) du conduit de guidage d'air (1).

3. Ensemble de guidage d'air selon l'une quelconque des revendications précédentes, **caractérisé en ce qu'**est prévu, sur la section de liaison (6), un élément d'étanchéité pour l'étanchéification par rapport à l'autre conduit de guidage d'air ou à l'élément de répartition d'air (20).

4. Ensemble de guidage d'air selon l'une quelconque des revendications précédentes, **caractérisé en ce que** le conduit de guidage d'air (1) est constitué d'un matériau thermoplastique.

5. Ensemble de guidage d'air selon la revendication 4, **caractérisé en ce que** le matériau thermoplastique comprend un polyamide ou une polyoléfine, en particulier du PE-HD.

6. Ensemble de guidage d'air selon l'une quelconque des revendications précédentes, **caractérisé en ce que** l'ensemble de guidage d'air est prévu pour l'aération de l'espace pour les pieds d'un véhicule à moteur.

7. Module de guidage d'air avec un ensemble de guidage d'air selon l'une quelconque des revendications précédentes et avec un autre conduit de guidage d'air relié à l'ensemble de guidage d'air ou avec un élément de répartition d'air (20) relié à l'ensemble de guidage d'air.

8. Module de guidage d'air selon la revendication 7, **caractérisé en ce que** l'élément de répartition d'air (20) est un dispositif de sortie d'air pourvu d'une grille ou de lamelles.
